# EUROPEAN PATENT SPECIFICATION

(11) **EP 3 688 060 B1**
(45) Date of publication and mention of the grant of the patent: **02.10.2024**
(21) Application number: 18786186.9
(22) Date of filing: 26.09.2018
(51) Int. Cl.: C08G 18/76, C08J 9/00, C08J 9/14, C08G 18/18, C08G 18/48

(54) **POLYURETHANE RIGID FOAM SYSTEM WITH ENHANCED POLYOL SHELF LIFE AND STABILITY**
POLYURETHANHARTSCHAUMSYSTEM MIT VERBESSERTER POLYOLHALTBARKEIT UND -STABILITÄT
SYSTÈME DE MOUSSE RIGIDE DE POLYURÉTHANE PRÉSENTANT UNE DURÉE DE CONSERVATION ET UNE STABILITÉ DE CONSERVATION DE POLYOL AMÉLIORÉES

(30) Priority: 28.09.2017 US 201762564687 P
(43) Date of publication of application: 05.08.2020
(73) Proprietor: DOW GLOBAL TECHNOLOGIES LLC, Midland, MI 48674 (US)
(72) Inventor: TATE, Michael P., Midland Michigan 48667 (US); HYDUK, Brian K., Marietta Georgia 30062 (US); TAYLOR, Gerald D., Marietta Georgia 30062 (US); VOLZ, Todd W., Canton Georgia 30114 (US); ATHEY, Phillip S., Freeport Texas 77541 (US)
(74) Representative: Beck Greener LLP
(86) International application number: PCT/US2018/052896
(87) International publication number: WO 2019/067572

(56) References cited:
- EP-A1- 0 669 305
- WO-A1-2014/030654
- WO-A1-2015/200408
- WO-A1-2016/149001
- WO-A1-2016/162362
- CN-A- 107 099 018
- CN-A- 108 148 166
- JP-A- 2018 123 308
- US-A1- 2016 145 374
- JEFFAMINE ET AL: "Auxiliary products", 2013, XP055540418, Retrieved from the Internet <URL:http://www.huntsman.com/performance_products/Media%20Library/a_MC348531CFA3EA9A2E040EBCD2B6B7B06/Home_MC348531CFA8BA9A2E040EBCD2B6B7B06/Key%20markets_1_MC348531CFD2FA9A2E040EBCD2B6B7B06/PU%20catalysts_MC348531CFF97A9A2E040EBCD2B6B7B06/files/JEFFCAT %20Catalysts_Brochure_APAC_ENG.pdf> [retrieved on 20190110]

## Description

### Field

The disclosure relates to polyol premix compositions. More specifically, it relates to polyol premix compositions that are useful for the preparation of rigid foams.

### Background

CN 107099018A discloses an ultra-low-temperature-resistant halogen-free flame-retardant glass fiber reinforced hard polyurethane thermal insulation material produced from an environment-friendly foaming agent, and a preparation method thereof.

WO 2016/162362A1 discloses a polyol premix composition for rigid polyurethane foams comprising a hydrohaloolefin as foaming agent, an amine catalyst and an aliphatic dicarboxylic acid.

WO 2016/149001A1 discloses a method of forming a polyurethane foam article includes the step of forming a resin composition. The resin composition includes a polyol component, an amine catalyst, and a blowing component. The blowing component includes a hydrofluoroolefin and formic acid. The method also includes the steps of combining the resin composition, a recycled resin composition, and an isocyanate component to form a reaction mixture and discharging the reaction mixture to form the polyurethane foam article.

WO 2014/030654A1 discloses a raw material blended composition for producing a polyurethane foam, the composition comprises an amine catalyst composition (A) comprising a tertiary amine and acid, a foaming agent (B) comprising a hydrohaloolefin, and a polyol (C).

WO 2015/200408A1 discloses pyrrolidine-based catalysts for use in a polyurethane formulation. The polyurethane formulation includes the pyrrolidine-based catalyst, a compound containing an isocyanate functional group, an active hydrogencontaining compound.

US 2016/145374A1 discloses a polyol mixture for producing a rigid polyurethane foam, the polyol mixture containing (A) a polyol component; (B) a blowing agent containing one or more hydrohaloolefin-based blowing agents; and (C) a catalyst containing an imidazole-based catalyst.

EP 0669305A1 discloses a hydrochlorofluorocarbon (HCFC) decomposition inhibitor comprising at least one member selected from among a mixture of an organic acid with an amine, a fluorine-free halohydrocarbon, a carboxylic ester, a nitrile compound, a carbonyl compound and a halogenated nitro compound, and a method of inhibiting the decomposition of HCFC with the inhibitor.

With the use of halogenated olefin blowing agents in the production of polyurethane and/or polyisocyanurate rigid foams, particularly trans-1,3,3,3-tetrafluoropropene (HFO-1234ze), and 1-chloro-3,3,3-trifluoropropene (HFCO-1233zd), it has been observed that when such species are premixed with polyols, catalysts, surfactants and possibly flame retardants to form a polyol premix composition, and left in storage at ambient conditions, there are gradual decomposition reactions that occur in the polyol premix composition resulting in deterioration in the quality of the foam prepared therefrom and undesirable changes in the reactivity and other properties of the polyol premix composition. These negative effects are worsened at higher temperatures. It would be desirable to have a polyol premix composition having improved shelf life.

### Summary

The polyol premix composition of the disclosure is such a storage stable polyol premix composition comprising a carboxylic acid having from 1 to 5 carbon atoms wherein the carboxylic acid is formic acid, a polyol, a silicone surfactant, an amine catalyst, and at least one blowing agent comprising HFO-1234ze and/or HFCO-1233zd, wherein 3 to 5.5 equivalents of carboxylic acid are employed per equivalent of catalytic nitrogen sites of the amine catalyst, with the proviso that a foam prepared from the composition has a Storage Stable Value of at least 7 days.

The disclosure further entails a foamable composition comprising a mixture of an organic polyisocyanate and the polyol premix composition.

A further aspect of the disclosure is a rigid polyurethane foam prepared from the foamable composition, wherein the density of the foam is at least 1.5 to 6.0 lb./cubic foot (24 to 96 Kg/m³).

Surprisingly, the polyol premix composition of the disclosure has improved shelf life.

### Detailed Description

The disclosure provides a storage stable polyol premix composition comprising a carboxylic acid having from 1 to 5 carbon atoms wherein the carboxylic acid is formic acid, a polyol, a silicone surfactant, an amine catalyst, and at least one blowing agent comprising HFO-1234ze and/or HFCO-1233zd, wherein 3 to 5.5 equivalents of carboxylic acid are employed per equivalent of catalytic nitrogen sites of the amine catalyst, with the proviso that a foam prepared from the composition has a Storage Stable Value of at least 7 days.. In one embodiment, the composition has a Storage Stable Value of at least 10 days. In addition, the disclosure includes a process for the preparation of such a composition, a foamable composition comprising a mixture of an organic polyisocyanate and the polyol premix composition, and a rigid polyurethane foam prepared from the foamable composition wherein the density of the foam is from at least 1.5 to 6.0 lb./cubic foot (24 to 96 Kg/m³).

The disclosure also provides a method of preparing a polyurethane or polyisocyanurate foam comprising reacting an organic polyisocyanate with the polyol premix composition, and includes the resulting foam, which preferably is a rigid foam.

As used herein, the terms "a," "an," "the," "at least one," and "one or more" are used interchangeably. The terms "comprises" and "includes" and variations thereof do not have a limiting meaning where these terms appear in the description and claims. Thus, for example, "a" material can be interpreted to mean "one or more" materials, and a composition that "includes" or "comprises" a material can be interpreted to mean that the composition includes things in addition to the material.

Unless stated to the contrary, implicit from the context, or customary in the art, all parts and percentages are based on weight and all test methods are current as of the filing date of this disclosure. The abbreviation "wt.%" stands for weight percent.

As also used in this application, "shelf life" means that when a polyol premix composition is subjected to accelerated aging using the procedure of the Stability Test described hereinbelow, the resulting polyurethane foam has physical properties such as foam height, gel time, density, within approximately 10% of those parameters of a foam prepared from the polyol premix composition, using the same formulation, prior to accelerated aging.

"Storage Stable Value" means the number of days that the appearance of a foam prepared according to the procedure of the Stability Test remains essentially the same. For example, a polyol premix composition having a Storage Stable Value of at least 7 days is a polyol premix composition for which a foam prepared therefrom according to the procedure of the Stability Test is essentially the same after 7 days as it was immediately after its initial preparation. The term "essentially the same" means a second or later foam produced in the Stability Test does not change compared to the first foam prepared in the Stability Test meets at least one of the following criteria: 1) visually inspected foam is unchanged in appearance including color and cell structure; and/or 2) all of the following foam properties are within 10% of their original values: gel time, core density, free-rise density, and k-factor.

As used herein, the term "storage stable" means that the polyol premix composition has a Storage Stable Value of at least 7 days.

As used herein, the term "HFO" stands for hydrofluoroolefin. As used herein, the term "HCFO" stands for hydrochlorofluoroolefin.

As used herein, the term "halogenated olefin" is a subset of HFO and HCFOs with the structure R₁R₂C=CR₃R₄ where at least one of R₁, R₂, R₃, or R₄ is a halogen, e.g., fluorine, chlorine.

The term "stoichiometric excess," as used in connection with the carboxylic acid, means that the number of equivalents of carboxylic acid moieties present exceeds the number of equivalents of active nitrogen sites in the catalyst(s). For example, in one embodiment, when the catalyst is 1 equivalent of a divalent amine, then more than two equivalents of a monofunctional carboxylic acid is employed.

The storage stable polyol premix composition comprises a carboxylic acid having from 1 to 5 carbon atoms wherein the carboxylic acid is formic acid, a polyol, a silicone surfactant, an amine catalyst, and at least one blowing agent comprising HFO-1234ze and/or HFCO-1233zd, and wherein 3 to 5.5 equivalents of carboxylic acid are employed per equivalent of catalytic nitrogen sites of the amine catalyst.

The carboxylic acid has from 1 to 5 carbon atoms. It may be monofunctional or polyfunctional. It may be saturated or unsaturated, although saturated carboxylic acids are preferred. Examples of the carboxylic acid include formic acid, acetic acid, propanoic acid, butanoic acid and pentanoic acid. Carboxylic acids having from 1 to 5 carbon atoms and methods for their preparation are well known. In one embodiment, the pKa of the acid is at most 3.8. According to the present invention, the carboxylic acid is formic acid.

The carboxylic acid is employed in an amount sufficient to neutralize the active catalytic sites of any amine present in the polyol premix composition. In various embodiments, the amount of carboxylic acid is from 3 to 5.5 equivalents, or from 4 to 5 equivalents per equivalent of catalytic nitrogen sites of the amine catalyst. In one embodiment, wherein the blowing agent comprises HFO-1234ze, from 3 to 5.5 equivalents, or from 3.5 to 5.5 equivalents, of the carboxylic acid are employed per equivalent of catalytic nitrogen sites of the amine catalyst. In one embodiment, wherein the blowing agent comprises HFCO-1233zd, from 3 to 4 equivalents, of the carboxylic acid are employed per equivalent of catalytic nitrogen sites of the amine catalyst.

The amine catalyst is used in conjunction with the carboxylic acid. Without desiring to be bound by any particular theory, it nonetheless is thought that the acid amine complex stabilizes the amine catalyst, preventing access to the HFO-1234ze or HFCO-1233zd, thereby inhibiting degradation of the HFO or HFCO blowing agent.

The amine catalyst may be any amine compound or complex that catalyzes the formation of polyurethane or polyisocyanurate foam. The catalyst is employed in a catalytic amount. These catalysts are well-known and many are commercially available.

Examples of suitable amine catalysts include aliphatic or aromatic, cyclic or acyclic tertiary amines. Preferred optional amine cocatalysts include Polycat 8 (Evonik), Polycat 12 (Evonik), Polycat 203 (Evonik), Polycat 204 (Evonik), Polycat 210 (Evonik), Polycat 211 (Evonik), Polycat 218 (Evonik), Dabco 2040 (Evonik), Dabco T (Evonik), RC-102 (Rhein Chemie), Jeffcat DMDEE (Huntsman), Jeffcat DM-70 (Huntsman), Jeffcat ZR-70 (Huntsman), Jeffcat DMP (Huntsman), N.N-dimethyl-p-toluene, N,N-dimethylbenzylamine, N-ethylmorpholine, N-methylmorpholine, dimorpholinodimethylether, and triethanolamine.

The amine catalyst is employed in an amount sufficient to allow the preparation of a desired foam when the polyol premix composition is contacted with an isocyanate and/or isocyanurate. For example, the amount of the amine in the polyol premix composition advantageously may be from 0.1 to 5, or 0.2 to 3 weight percent based on the weight of the polyol premix composition.

The blowing agent comprises HFO-1234ze and/or HFCO-1233zd. The blowing agent is employed in an amount sufficient to allow the preparation of a foam of a desired density when the polyol premix composition is contacted with an isocyanate and/or isocyanurate. The total amount of blowing agent present in the polyol premix composition is an amount of from 1 wt.% to 30 wt.%, preferably from 3 wt.% to 25 wt.%, and more preferably from 5 wt.% to 25 wt.%, by weight of the polyol premix composition, wherein the total weight percent of the composition is 100 wt.%. In one embodiment, the polyol premix composition may optionally include from 0.1 wt.% to 2.5 wt.% of water.

The blowing agent may also optionally comprise one or more other blowing agents, i.e. non-hydrofluoroolefin blowing agents, such as halogenated olefins, and optionally a hydrohaloolefin, hydrocarbon, fluorocarbon, chlorocarbon, hydrochlorofluorocarbon, hydrofluorocarbon, halogenated hydrocarbon, ether, ester, alcohol, aldehyde, ketone, water, other gas generating material, and combinations thereof. Examples of other halogenated olefin blowing agents include 1,1,1,4,4,4-hexafluoro-2-butene (1336mzz-Z); hydrocarbons, e.g. cyclopentane, n-pentane, isopentane, and isobutane; hydrofluorocarbons, e.g. HFC-134a, HFC-245fa, and HFC-365mfc; hydrochlorofluorocarbons, e.g. HCFC-141b; fluorocarbons; chlorocarbons; chlorofluorocarbons, e.g. CFC-11); halogenated ethers; ethers; esters, e.g. methyl formate; aldehydes; ketones, e.g. acetone; and CO₂-generating materials, e.g. water.

Thus, in one embodiment of the disclosure, the blowing agent comprises a hydrohaloolefin comprising at least one, or a combination, of HFO-1234ze, HFCO-1233zd, and isomer blends thereof, and optionally a hydrocarbon, hexafluorobutene, fluorocarbon, chlorocarbon, fluorochlorocarbon, halogenated hydrocarbon, ether, fluorinated ether, ester, alcohol, aldehyde, ketone, CO₂-generating material or combinations thereof.

The hydrohaloolefin preferably comprises at least one haloalkene such as a fluoroalkene or chlorofluoroalkene containing from 3 to 4 carbon atoms and at least one halogen bonded to one of the carbons in a carbon-carbon double bond. Preferred hydrohaloolefins nonexclusively include trifluoropropenes, tetrafluoropropenes such as (1234), pentafluoropropenes such as (1225), chlorotrifloropropenes such as (1233), chlorodifluoropropenes, chlorotrifluoropropenes, chlorotetrafluoropropenes, hexafluorobutenes and combinations of these. More preferred for the compounds are the tetrafluoropropene, pentafluoropropene, and chlorotrifluoropropene compounds in which the unsaturated terminal carbon has not more than one F or Cl substituent. Included are 1,3,3,3-tetrafluoropropene (1234ze); 1,1,3,3-tetrafluoropropene; 1,2,3,3,3-pentafluoropropene (1225ye); 1,2,3,3,3-pentafluoropropene, 1,1,1,3,3-pentafluoropropene (1225zc) and 1,1,2,3,3-pentafluoropropene (1225yc); (Z)-1,1,1,2,3-pentafluoropropene (1225yez); 1-chloro-3,3,3-trifluoropropene (1233zd) or combinations thereof, and any and all stereoisomers of each of these.

Further additional examples of blowing agent nonexclusively include hydrocarbons; ethers, halogenated ethers; esters, alcohols, aldehydes, ketones, pentafluorobutane; pentafluoropropane; hexafluoropropane; heptafluoropropane; trans-1,2 dichloroethylene; methylal, methyl formate; 1-chloro-1,2,2,2-tetrafluoroethane (124); 1,1-dichloro-1-fluoroethane (141b); 1,1,1,2-tetrafluoroethane (134a); 1,1,2,2-tetrafluoroethane (134); 1-chloro 1,1-difluoroethane (142b); 1,1,1,3,3-pentafluorobutane (365mfc); 1,1,1,2,3,3,3-heptafluoropropane (227ea); trichlorofluoromethane (11); dichlorodifluoromethane (12); dichlorofluoromethane (22); 1,1,1,3,3,3-hexafluoropropane (236fa); 1,1,1,2,3,3-hexafluoropropane (236ea); 1,1,1,2,3,3,3-heptafluoropropane (227ea), difluoromethane (32); 1,1-difluoroethane (152a); 1,1,1,3,3-pentafluoropropane (245fa); butane; isobutane; normal pentane; isopentane; cyclopentane, or combinations thereof.

The polyol can be any polyol or polyol mixture that reacts with an isocyanate in preparing a polyurethane or polyisocyanurate foam. Useful polyols comprise one or more of a sucrose containing polyol; phenol, a phenol formaldehyde containing polyol; a glucose containing polyol; a sorbitol containing polyol; a methylglucoside containing polyol; an aromatic polyester polyol; glycerol; ethylene glycol; diethylene glycol; propylene glycol; graft copolymers of polyether polyols with a vinyl polymer; a copolymer of a polyether polyol with a polyurea; one or more of (a) condensed with one or more of (b), wherein (a) is selected from glycerin, ethylene glycol, diethylene glycol, trimethylolpropane, ethylene diamine, pentaerythritol, soy oil, lecithin, tall oil, palm oil, and castor oil; and (b) is selected from ethylene oxide, propylene oxide, a mixture of ethylene oxide and propylene oxide; and combinations thereof. The polyol component is usually present in the polyol premix composition in an amount of from 60 wt.% to 95 wt.%, preferably from 65 wt.% to 95 wt.%, and more preferably from 70 wt.% to 90 wt.%, by weight of the polyol premix composition, wherein the total weight percent of the composition is 100 wt.%.

The polyol premix composition also contains a surfactant. The surfactant is preferably used to form a foam from the mixture, as well as to control the size of the bubbles of the foam so that a foam of a desired cell structure is obtained. Preferably, a foam with small bubbles or cells therein of uniform size is desired since it has the most desirable physical properties such as compressive strength and thermal conductivity. Also, it is advantageous to have a foam with stable cells that do not collapse prior to forming or during foam rise.

Surfactants for use in the preparation of polyurethane or polyisocyanurate foams are well-known to those skilled in the art, and many are commercially available. Such materials have been found to be applicable over a wide range of formulations allowing uniform cell formation and maximum gas entrapment to achieve very low density foam structures. The surfactant can comprise a silicone surfactant or a non-silicone surfactant or a combination thereof. The preferred silicone surfactant comprises a polysiloxane polyoxyalkylene block copolymer. Some representative silicone surfactants include, for example, Momentive's L-5130, L-5180, L-5340, L-5440, L-6100, L-6900, L-6980 and L-6988; Dow Corning's DC-193, DC-197, DC-5582, and DC-5598; and Tegostab B-8404, B-8407, B-8409 and B-8462 from Evonik Industries AG of Essen, Germany. Others are disclosed in US Patents 2,834,748; 2,917,480; 2,846,458 and 4,147,847. The surfactant is present in the polyol premix composition in an amount of from 0.5 wt.% to 6.0 wt.%, preferably from 1.0 wt.% to 4.0 wt.%, and more preferably from 1.5 wt.% to 3.0 wt.%, by weight of the polyol premix composition, wherein the total weight percent of the composition is 100 wt.%.

Examples of non-silicone surfactants include oxyethylated alkylphenols, oxyethylated fatty alcohols, paraffin oils, castor oil esters, ricinoleic acid esters, turkey red oil, groundnut oil, paraffins, silicone surfactants and fatty alcohols. A preferred non-silicone surfactant is VORASURF 504, which is commercially available from The Dow Chemical Company.

The preparation of polyurethane or polyisocyanurate foams using the compositions described herein may follow any of the methods well known in the art can be employed. In general, polyurethane or polyisocyanurate foams are prepared by combining an isocyanate, the polyol premix composition, and other materials such as optional flame retardants, colorants, or other additives. These foams can be rigid, or semi-rigid, and can have a closed cell structure, an open cell structure or a mixture of open and closed cells.

It is convenient in many applications to provide the components for polyurethane or polyisocyanurate foams in pre-blended formulations. Most typically, the foam formulation is pre-blended into two components. The isocyanate and optionally other isocyanate compatible raw materials, including but not limited to blowing agents and certain silicone surfactants, comprise the first component, commonly referred to as the "A" component, or A side composition. The polyol premix composition, including surfactant, catalysts, blowing agents, and optional other ingredients comprise the second component, commonly referred to as the "B" component or B-side composition. In any given application, the "B" component may not contain all the above listed components, for example some formulations omit the flame retardant if flame retardancy is not a required foam property. Accordingly, polyurethane or polyisocyanurate foams are readily prepared by bringing together the A and B-side components either by hand mix for small preparations and, preferably, machine mix techniques to form blocks, slabs, laminates, pour-in-place panels and other items, spray applied foams, froths. Optionally, other ingredients such as flame retardants, colorants, auxiliary blowing agents, water, and even other polyols can be added as a stream to the mix head or reaction site. Most conveniently, however, they are all incorporated into one B component as described above.

A foamable composition suitable for forming a polyurethane or polyisocyanurate foam may be formed by reacting an organic polyisocyanate and the polyol premix composition described above. Any organic polyisocyanate can be employed in polyurethane or polyisocyanurate foam synthesis inclusive of aliphatic and aromatic polyisocyanates. Suitable organic polyisocyanates include aliphatic, cycloaliphatic, araliphatic, aromatic, and heterocyclic isocyanates that are well known in the field of polyurethane chemistry. Preferred as a class are the aromatic polyisocyanates.

Representative organic polyisocyanates correspond to the formula: R(NCO)_{z} wherein R is a polyvalent organic radical that is either aliphatic, aralkyl, aromatic or mixtures thereof, and z is an integer that corresponds to the valence of R and is at least two. Representative of the organic polyisocyanates contemplated herein includes, for example, the aromatic diisocyanates such as 2,4-toluene diisocyanate, 2,6-toluene diisocyanate, mixtures of 2,4- and 2,6-toluene diisocyanate, crude toluene diisocyanate, methylene diphenyl diisocyanate, crude methylene diphenyl diisocyanate; the aromatic triisocyanates such as 4,4',4"-triphenylmethane triisocyanate, 2,4,6-toluene triisocyanates; the aromatic tetraisocyanates such as 4,4'-dimethyldiphenylmethane-2,2'5,5-'tetraisocyanate; arylalkyl polyisocyanates such as xylylene diisocyanate; aliphatic polyisocyanate such as hexamethylene-1,6-diisocyanate, lysine diisocyanate methylester; and mixtures thereof. Other organic polyisocyanates include polymethylene polyphenylisocyanate, hydrogenated methylene diphenylisocyanate, m-phenylene diisocyanate, naphthylene-1,5-diisocyanate, 1-methoxyphenylene-2,4-diisocyanate, 4,4'-biphenylene diisocyanate, 3,3'-dimethoxy-4,4'-biphenyl diisocyanate, 3,3'-dimethyl-4,4'-biphenyl diisocyanate, and 3,3'-dimethyldiphenylmethane-4,4'-diisocyanate; Typical aliphatic polyisocyanates are alkylene diisocyanates such as trimethylene diisocyanate, tetramethylene diisocyanate, and hexamethylene diisocyanate, isophorene diisocyanate, 4,4'-methylenebis(cyclohexyl isocyanate); typical aromatic polyisocyanates include m-, and p-phenylene disocyanate, polymethylene polyphenyl isocyanate, 2,4- and 2,6-toluenediisocyanate, dianisidine diisocyanate, bitoylene isocyanate, naphthylene 1,4-diisocyanate, bis(4-isocyanatophenyl)methene, bis(2-methyl-4-isocyanatophenyl)methane. Preferred polyisocyanates are the polymethylene polyphenyl isocyanates, particularly the mixtures containing from 30 to 85 percent by weight of methylenebis(phenyl isocyanate) with the remainder of the mixture comprising the polymethylene polyphenyl polyisocyanates of functionality higher than 2. These polyisocyanates are prepared by conventional methods known in the art. In one embodiment of the disclosure, the polyisocyanate and the polyol are employed in amounts that will yield an NCO/OH stoichiometric ratio in a range of from 0.9 to 7.0. In one embodiment of the disclosure, the NCO/OH equivalent ratio is, preferably, 1.0 or more and 3.0 or less, with the ideal range being from 1.1 to 2.5. Especially suitable organic polyisocyanates include polymethylene polyphenyl isocyanate, methylenebis(phenyl isocyanate), toluene diisocyanates, and combinations thereof.

In the preparation of polyisocyanurate foams, trimerization catalysts are used for the purpose of converting the blends in conjunction with excess A component to polyisocyanurate-polyurethane foams. The trimerization catalysts employed can be any catalyst known to one skilled in the art, including, but not limited to, glycine salts, tertiary amine trimerization catalysts, quaternary ammonium carboxylates, and alkali metal carboxylic acid salts and mixtures of the various types of catalysts. Preferred species within the classes are potassium acetate, potassium octoate, and sodium N-(2-hydroxy-5-nonylphenol)methyl-N-methylglycinate.

A conventional flame retardant can also be incorporated, preferably in amount of not more than 30 percent by weight of the combined A and B-sides. Examples of the optional flame retardant include tris(2-chloroethyl)phosphate, tris(2-chloropropyl)phosphate, tris(2,3-dibromopropyl)phosphate, tris(1,3-dichloropropyl)phosphate, tri(2-chloroisopropyl)phosphate, tricresyl phosphate, tri(2,2-dichloroisopropyl)phosphate, diethyl N,N-bis(2-hydroxyethyl)aminomethylphosphonate, dimethyl methylphosphonate, tri(2,3-dibromopropyl)phosphate, tri(1,3-dichloropropyl)phosphate, and tetra-kis-(2-chloroethyl)ethylene diphosphate, triethylphosphate, diammonium phosphate, various halogenated aromatic compounds, antimony oxide, aluminum trihydrate, polyvinyl chloride, melamine.

In addition to the previously described ingredients, other ingredients such as, dyes, fillers, pigments can be included in the preparation of the foams. Dispersing agents and cell stabilizers can be incorporated into the present blends. Conventional fillers for use herein include, for example, aluminum silicate, calcium silicate, magnesium silicate, calcium carbonate, barium sulfate, calcium sulfate, glass fibers, carbon black and silica. The filler, if used, is normally present in an amount by weight ranging from 5 parts to 100 parts per 100 parts of polyol. A pigment that can be used herein can be any conventional pigment such as titanium dioxide, iron oxide, antimony oxide, chrome green, chrome yellow, iron blue siennas, molybdate oranges and organic pigments such as para reds, benzidine yellow, toluidine red, toners and phthalocyanines.

The polyurethane or polyisocyanurate foams produced can vary in density (in-place density) from 0.5 pounds per cubic foot to 60 pounds per cubic foot, preferably from 1.0 to 20.0 pounds per cubic foot, and most preferably from 1.5 to 6.0 pounds per cubic foot (24 to 96 Kg/m³). The density obtained is a function of how much of the blowing agent or blowing agent mixture plus the amount of auxiliary blowing agent, such as water or other co-blowing agents is present in the A and/or B components, or alternatively added at the time the foam is prepared. These foams can be rigid, or semi-rigid foams, and can have a closed cell structure, an open cell structure or a mixture of open and closed cells. These foams are used in a variety of well-known applications, including but not limited to thermal insulation, cushioning, flotation, packaging, adhesives, void filling, crafts and decorative, and shock absorption.

### Specific Embodiments

### Materials Employed

DMCHA = N,N-Dimethylcyclohexylamine
DMBA = N,N-Dimethylbenzylamine
TCPP = Tris (chloroisopropyl) phosphate
PAPI^{™} 27 brand polymeric MDI is a polymethylene polyphenylisocyanate that contains MDI, and is available from The Dow Chemical Company.
Formic Acid (>95%) supplied by Aldrich Chemical

### Comparative Experiments 1-2 and Example 3

To determine the effect of the acid level use on the production of a 1234ze polyurethane foam, various test formulations are prepared as shown in Table 1. The formulations differ in the amount of carboxylic acid employed. Polyol 1 is a sucrose/glycerin-initiated polyether polyol with approximately a 225 nominal hydroxyl functionality of 4 and OH# = 360 mg KOH/g, available from The Dow Chemical Company, and Polyol 2 is a glycerin-initiated polyether polyol with a nominal hydroxyl functionality of approximately 3 and an OH# = 235 mg KOH/g and is also available from The Dow Chemical Company. Polyol 3 has a functionality of approximately 3 and an OH# = 650. The foam reactivity for these formulations is typical for a pour in place foam with gel times of 105-140 sec. Foam is prepared and evaluated using the following Stability Test procedure.

### Stability Test

This test is an accelerated aging test. It may be used to evaluate any polyol premix formulation and is not intended to be limited to the formulations shown hereinbelow, i.e. it may be employed with other formulations. The test involves preparing a first foam and then preparing one or more later foams after aging the polyol premix composition. Note that this Stability Test also may be conducted for aging periods longer or shorter than 7 days. See, e.g. Table 1. Higher result values are better, e.g. a Storage Stable Value of 10 days indicates higher storage stability compared to a Storage Stable Value of 7 days.

Load a sufficient amount of polyol premix composition, including blowing agent, into a pressure vessel. Place the vessel on a roller system to mix contents for 30-60 minutes.

Dispense the required amount of polyol premix compositions and make cup foams (22.5g polyol premix composition and 25g PAPI 27 brand polymeric MDI for reactivity measurement) noting gel time, and overall appearance of the foam. These data indicate the initial reactivity of these systems. Recharge the pressure vessel with polyol premix and blowing agent, and place the pressure vessel in an oven at 50°C (122°F).

After 7 days, remove the pressure vessel from the oven and cool it down to room temperature, by placing it on the roller system for 60 min.

Once at room temperature, carefully vent and decant required amount of polyol premix composition and make cup foams as described above, gel time and the appearance of the foam. Using the Arrhenius equation, this test, when conducted for 7 days, is predicted to mimic changes that would be observed during storage at ambient conditions for approximately 2 months.

The results for Comparative Experiments 1-2 and Example 3 are shown in Table 1.

**Table 1. 1234ze Stability**

| NAME | C.E. 1* | C.E. 2* | Example 3 |
|---|---|---|---|
| Mole ratio of Formic Acid to Nitrogen (from DMCHA/DMBA) | 1 | 2 | 4 |
| Polyol 1 | 44.8 | 44.8 | 44.8 |
| Polyol 2 | 13.2 | 13.2 | 13.2 |
| Polyol 3 | 13.2 | 13.1 | 13.3 |
| Tegostab B8462 | 2 | 2 | 2 |
| DMCHA (Polycat 8) | 1.4 | 1.4 | 1.4 |
| DMBA | 0.8 | 0.8 | 0.8 |
| TCPP | 15 | 15 | 15 |
| Formic Acid (>95% ) | 0.8 | 1.6 | 3.5 |
| HFO 1234ze | 6 | 6 | 6 |
| Water | 2.8 | 2.1 | 0 |
| Subtotal: | 100 | 100 | 100 |
| Gel Time, Initial (s) | 125 | 125 | 125 |
| Gel Time after 62 h @ 50° C (s) | 127 | 125 | 125 |
| Foam Appearance | initial stages of coarse cell formation | foam appearance is unchanged from day 1 | foam appearance is unchanged from day 1 |
| Gel Time after 7 Days @ 50 °C (s) | n/a | 127 | 130 |
| Foam Appearance | coarsecollapsed; dark yellow | very coarse; dark yellow, semi collapsed | foam appearance is unchanged from day 1 |

| | | | |
|---|---|---|---|
| * Not an embodiment of the invention | | | |

As can be seen from Table 1, the polyol premix composition of Ex. 3 has a Storage Stable Value of 7 days, as the appearance is essentially unchanged compared to the appearance of the initial foam. The polyol premix compositions of C.E. 1 and 2 do not pass the Stability Test at 7 days, and thus are not storage stable.

### Comparative Experiments 4-5 and Example 6

The procedures of Comparative Experiments 1-2 and Example 3 are repeated for 1233zd using the polyol premix compositions of Table 2. The foam reactivity for these formulations is typical for a pour in place foam with gel times of 105-120 sec. The results are shown in Table 2.

**Table 2. 1233zd Stability**

| NAME | | C.E. 4* | C.E. 5* | Example 6 |
|---|---|---|---|---|
| Mole ratio of Formic Acid to Nitrogen (from amine catalyst(s)) | | 1 | 2 | 4 |
| Polyol(s) | | 71.2 | 71.1 | 71.3 |
| Silicone surfactant | | 2 | 2 | 2 |
| Amine catalyst(s) | | 2.2 | 2.2 | 2.2 |
| TCPP | | 15 | 15 | 15 |
| Formic Acid (>95% ) | | 0.8 | 1.6 | 3.5 |
| HFO 1233zd | | 6 | 6 | 6 |
| Water | | 2.8 | 2.1 | 0 |
| Subtotal: | | 100 | 100 | 100 |
| Gel Time, Initial (s) | | | | |
| Gel Time after 7 Days *@* 50 °C (s) | | | | |
| | Foam Appearance | | | |
| | Gel Time after 10 days @ 50° C | | | |

It can be seen by comparing the results of the Stability Test, which is an accelerated aging procedure, in Table 1 that the use of higher levels of formic acid results in extending the shelf life of the polyol premix compositions. The results also show that the use of formic acid in an equimolar amount sufficient to produce an adduct of the amine catalyst and the formic acid is not sufficient to improve shelf life.

Thus the polyol premix composition of this disclosure, which contains a carboxylic acid, such as formic acid, in stoichiometric excess relative to the amount of catalytic nitrogens present in the composition, provides unexpectedly improved shelf life, as evidenced by a having Storage Stable Value of at least 7 days. Systems with higher levels of formic acid are more stable and have higher Storage Stable Values.

## Claims

1. A storage stable polyol premix composition comprising a carboxylic acid having from 1 to 5 carbon atoms wherein the carboxylic acid is formic acid, a polyol, a silicone surfactant, an amine catalyst, and at least one blowing agent comprising HFO-1234ze and/or HFCO-1233zd, wherein 3 to 5.5 equivalents of the carboxylic acid are employed per equivalent of catalytic nitrogen sites of the amine catalyst, with the proviso that a foam prepared from the composition has a Storage Stable Value of at least 7 days.

2. The composition of claim 1 wherein a foam prepared from the composition has a Storage Stable Value of at least 10 days.

3. The composition of any one of the preceding claims wherein the blowing agent comprises HFO-1234ze.

4. The composition of any one of claims 1 to 2 wherein the blowing agent comprises HFCO-1233zd and from 3 to 5 equivalents of the carboxylic acid are employed per equivalent of catalytic nitrogen sites of the amine catalyst.

5. The composition of any one of the preceding claims wherein 4 to 5 equivalents of carboxylic acid are employed per equivalent of catalytic nitrogen sites of the amine catalyst.

6. The composition of any of the preceding claims wherein the catalyst is present in a catalytic amount, the polyol is present in an amount of from 60 wt.% to 95 wt.%, or from 65 wt.% to 95 wt.%, or from 70 wt.% to 90 wt.%, the blowing agent present in in an amount of from 1 wt.% to 30 wt.%, or from 3 wt.% to 25 wt.%, or from 5 wt.% to 25 wt.%, the surfactant is present in an amount of from 0.5 wt.% to 6.0 wt.%, or from 1.0 wt.% to 4.0 wt.%, or from 1.5 wt.% to 4 wt.%, by weight of the composition, wherein the total weight percent of the composition is 100 wt.%.

7. A foamable composition comprising a mixture of an organic polyisocyanate and the polyol premix composition of any of the preceding claims.

8. A rigid polyurethane foam prepared from the composition of claim 7, wherein the density of the foam is from 1.5 to 6.0 lb /cubic foot (24 to 96 Kg/m³).

## Patentansprüche

1. Lagerstabile Polyolvormischungszusammensetzung, umfassend eine Carbonsäure, die von 1 bis 5 Kohlenstoffatome aufweist, wobei die Carbonsäure Ameisensäure ist, ein Polyol, ein Silicontensid, einen Aminkatalysator und mindestens ein Treibmittel, umfassend HFO-1234ze und/oder HFCO-1233zd, wobei 3 bis 5,5 Äquivalente der Carbonsäure pro Äquivalent katalytischer Stickstoffstellen des Aminkatalysators eingesetzt werden, mit der Maßgabe, dass ein Schaumstoff, der aus der Zusammensetzung hergestellt ist, einen Lagerstabilitätswert von mindestens 7 Tagen aufweist.

2. Zusammensetzung nach Anspruch 1, wobei ein Schaumstoff, der aus der Zusammensetzung hergestellt ist, einen Lagerstabilitätswert von mindestens 10 Tagen aufweist.

3. Zusammensetzung nach einem der vorstehenden Ansprüche, wobei das Treibmittel HFO-1234ze umfasst.

4. Zusammensetzung nach einem der Ansprüche 1 bis 2, wobei das Treibmittel HFCO-1233zd umfasst und von 3 bis 5 Äquivalente der Carbonsäure pro Äquivalent katalytischer Stickstoffstellen des Aminkatalysators eingesetzt werden.

5. Zusammensetzung nach einem der vorstehenden Ansprüche, wobei 4 bis 5 Äquivalente von Carbonsäure pro Äquivalent katalytischer Stickstoffstellen des Aminkatalysators eingesetzt werden.

6. Zusammensetzung nach einem der vorstehenden Ansprüche, wobei der Katalysator in einer katalytischen Menge vorhanden ist, das Polyol in einer Menge von 60 Gew.-% bis 95 Gew.-% oder von 65 Gew.-% bis 95 Gew.-% oder von 70 Gew.-% bis 90 Gew.-% vorhanden ist, das Treibmittel in einer Menge von 1 Gew.-% bis 30 Gew.-% oder von 3 Gew.-% bis 25 Gew.-% oder von 5 Gew.-% bis 25 Gew.-% vorhanden ist, das Tensid in einer Menge von 0,5 Gew.-% bis 6,0 Gew.-% oder von 1,0 Gew.-% bis 4,0 Gew.-% oder von 1,5 Gew.-% bis 4 Gew.-% vorhanden ist, nach Gewicht der Zusammensetzung, wobei der Gesamtgewichtsprozentsatz der Zusammensetzung 100 Gew.-% beträgt.

7. Schäumbare Zusammensetzung, umfassend eine Mischung aus einem organischen Polyisocyanat und der Polyolvormischungszusammensetzung nach einem der vorstehenden Ansprüche.

8. Starrer Polyurethanschaumstoff, der aus der Zusammensetzung nach Anspruch 7 hergestellt ist, wobei die Dichte des Schaumstoffs von 1,5 bis 6,0 Ib/Kubikfuß (24 bis 96 kg/m³) beträgt.

## Revendications

1. Composition de prémélange de polyol stable au stockage comprenant un acide carboxylique ayant de 1 à 5 atomes de carbone, dans laquelle l'acide carboxylique est de l'acide formique, un polyol, un agent tensioactif à base de silicone, un catalyseur à base d'amine et au moins un agent gonflant comprenant HFO-1234ze et/ou HFCO-1233zd, dans laquelle 3 à 5,5 équivalents de l'acide carboxylique sont utilisés par équivalent de sites d'azote catalytique du catalyseur à base d'amine, à condition qu'une mousse préparée à partir de la composition ait une valeur de stabilité au stockage d'au moins 7 jours.

2. Composition selon la revendication 1 dans laquelle une mousse préparée à partir de la composition a une valeur de stabilité au stockage d'au moins 10 jours.

3. Composition selon l'une quelconque des revendications précédentes dans laquelle l'agent gonflant comprend HFO-1234ze.

4. Composition selon l'une quelconque des revendications 1 à 2, dans laquelle l'agent gonflant comprend HFCO-1233zd et de 3 à 5 équivalents de l'acide carboxylique sont utilisés par équivalent de sites d'azote catalytique du catalyseur à base d'amine.

5. Composition selon l'une quelconque des revendications précédentes dans laquelle 4 à 5 équivalents d'acide carboxylique sont utilisés par équivalent de sites d'azote catalytiques du catalyseur à base d'amine.

6. Composition selon l'une quelconque des revendications précédentes dans laquelle le catalyseur est présent en une quantité catalytique, le polyol est présent en une quantité de 60 % en poids à 95 % en poids, ou de 65 % en poids à 95 % en poids, ou de 70 % en poids à 90 % en poids, l'agent gonflant est présent en une quantité de 1 % en poids à 30 % en poids, ou de 3 % en poids à 25 % en poids, ou de 5 % en poids à 25 % en poids, l'agent tensioactif est présent en une quantité de 0,5 % en poids à 6,0 % en poids, ou de 1,0 % en poids à 4,0 % en poids, ou de 1,5 % en poids à 4 % en poids, en poids de la composition, dans laquelle le pourcentage en poids total de la composition est de 100 % en poids.

7. Composition moussante comprenant un mélange d'un polyisocyanate organique et de la composition de prémélange de polyol selon l'une quelconque des revendications précédentes.

8. Mousse de polyuréthane rigide préparée à partir de la composition selon la revendication 7, dans laquelle la densité de la mousse est de 1,5 à 6,0 Ib/pied cube (24 à 96 Kg/m³).
